**Europäisches Patentamt**

**European Patent Office**

**Office européen des brevets**

(19)

(11) Publication number : **0 309 430 B1**

(12) # EUROPEAN PATENT SPECIFICATION

(45) Date of publication of patent specification :
**29.07.92 Bulletin 92/31**

(51) Int. Cl.⁵ : **B25J 5/02,** B25J 11/00, B30B 1/30

(21) Application number : **88850308.3**

(22) Date of filing : **16.09.88**

(54) **Handling apparatus.**

(30) Priority : **21.09.87 SE 8703629**

(43) Date of publication of application :
**29.03.89 Bulletin 89/13**

(45) Publication of the grant of the patent :
**29.07.92 Bulletin 92/31**

(84) Designated Contracting States :
**BE DE ES FR GB IT NL SE**

(56) References cited :
**DE-A- 3 436 576**
**DE-C- 852 039**

(56) References cited :
**SE-B- 419 958**
**SE-B- 434 234**
**SE-B- 452 753**
**US-A- 4 648 786**

(73) Proprietor : **AB VOLVO**
**Assar Gabrielssons väg Torslanda**
**S-405 08 Göteborg (SE)**

(72) Inventor : **Sörensen, Leif**
**Smultronvägen 5**
**S-293 00 Olofström (SE)**

(74) Representative : **Hellborg, Torild et al**
**H. ALBIHNS PATENTBYRA AB P.O. Box 3137**
**S-103 62 Stockholm (SE)**

EP 0 309 430 B1

# Description

This invention relates to apparatus for handling piece goods, such as pressed sheet-metal elements for instance, and intended to be positioned, e.g., between two presses in a line of presses and there transport or shuttel said goods singly from one press to the next press in line (see for example DE-A- 3 436 576).

Press lines in which sheet-metal elements or items are pressed, for instance in the car manufacturing industry, incorporate various different kinds of transporting and handling apparatus constructed for transferring the elements from one press to the next press in line. Such apparatus is normally placed on the floor between respective presses, which means that this area of the floor occupied by the apparatus is blocked off. This can cause difficulties when changing tools in respective presses and also when carrying out other forms of maintenance work. There is also a risk that the apparatus will be damaged by auxiliary material handling equipment active in the vicinity of said apparatus, e.g. trucks or rail systems.

The object of the present invention is to provide transporting and handling apparatus which will avoid these drawbacks and leave the floor space between the presses completely free for the exchange of tools and for carrying out other maintenance work, while at the same time removing the risk of damage to the equipment by the aforesaid auxiliary transporting devices. This object is achieved by means of transporting and handling apparatus having the features set forth in Claim 1.

The invention will now be described in more detail with reference to the accompanying drawings, in which

Fig. 1 is a perspective view of one embodiment of the inventive apparatus arranged between two presses;

Fig. 2 is a simplified side view of the apparatus illustrated in Fig. 1;

Fig. 3 is a view from above of the apparatus in Fig. 2;

Fig. 4 is an end view of the apparatus illustrated in Figs. 2 and 3;

Fig. 5 is a side view similar to that of Fig. 2, but illustrating the pattern of movement carried out by certain apparatus components;

Fig. 6 is an end view of a trolley forming part of the inventive handling apparatus;

Fig. 7 is a partially cut-away end view of part of a movement transmission means forming part of the apparatus;

Fig. 8 is a partly cut-away view of said movement transmission means;

Fig. 9 is a perspective view of another embodiment of the inventive handling apparatus; and

Figs. 10-12 illustrate the pattern of movement carried out by a gripping device forming part of the inventive apparatus.

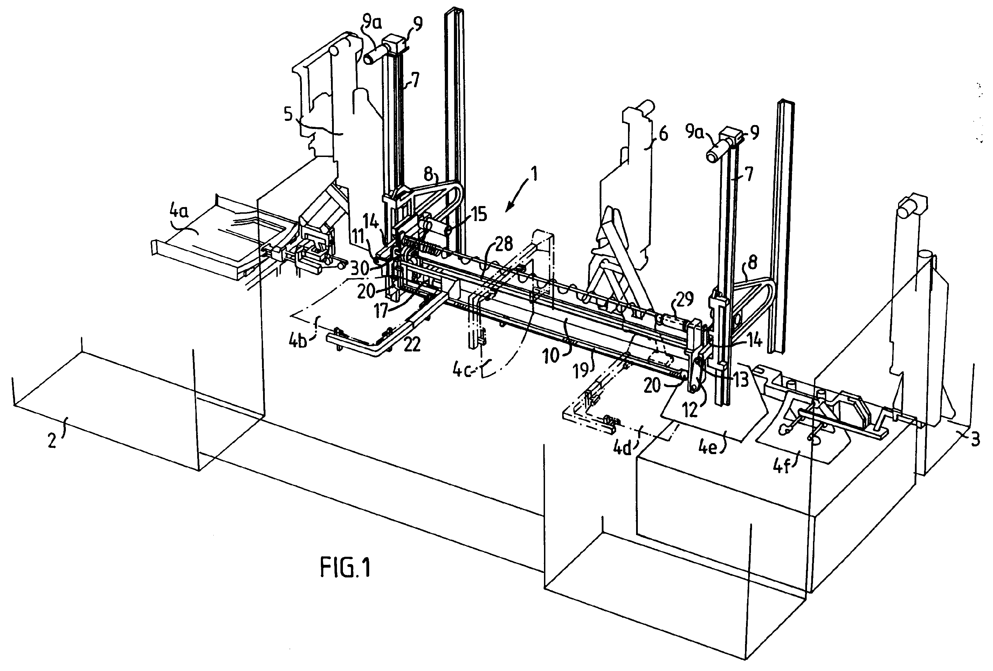

In the Fig. 1 illustration, the inventive transporting and handling apparatus 1 is placed between two presses 2 and 3 which form part of a line of presses intended for the manufacture of sheet-metal elements 4. Fig. 1 shows sheet-metal elements 4a-f in their various respective positions during transfer from the press 2 to the press 3. In the illustrated case, each element 4 is removed from the press 2 with the aid of a feeder 5 (not shown in detail) which transfers respective elements to the apparatus 1. The element 4 is then moved by the apparatus 1 to the press 3, where a feeder 6 moves the elements into the press.

The inventive apparatus includes two vertical, hollow guides 7 mounted on respective presses 2 and 3. Each guide 7 is intended to carry a height adjustment slide 8 which can be moved vertically along its respective guides 7 with the aid of a lifting device 9, e.g. a nut and spindle type jack, mounted within the hollow guide 7 and dimensioned for lifting the whole of the handling apparatus 1. Each jack 9 is provided with its separate motor 9a, which is fitted with a pulse emitter in order to enable the jack to be controlled to a desired position.

Extending between the height adjustment slides 8 is a transport rail 10. As seen in Fig. 1, the left-hand end of the rail 10 is suspended by means of a pivot bearing 11 which affords direct connection between the slide 8 and the rail 10, whereas the right-hand end of the rail is connected to the slide 8 by means of an intermediate link arm 12 and a pivot bearing 13. The pivot bearings 11 and 13 are, in turn, mounted on a respective lateral adjustment slide 14 arranged for linear displacement in the slides 8.

Each lateral adjustment slide 14 is provided with a separate drive motor 15, which in turn is provided with a pulse emitter for enabling the slide to be controlled to the position desired.

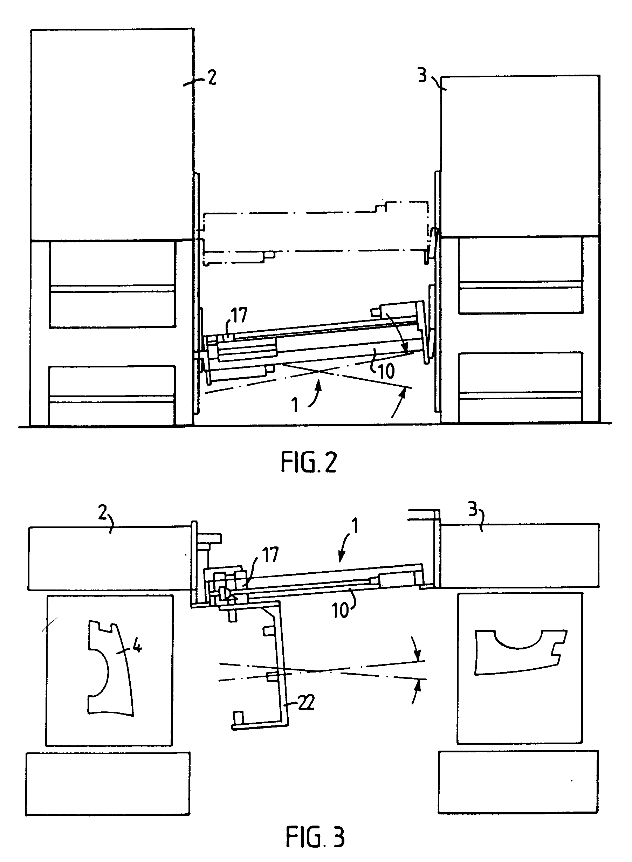

The rail 10 can be positioned obliquely, or tilted, about its longitudinal axis, by displacing the lateral adjustment slides 14 to mutually different extents in the two ends of the rail 10, as illustrated more clearly in Fig. 3. This enables the element 4 to be moved laterally during shuttling of said elements from the press 2 to the press 3. The intermediate link arm 12 and the respective pivot bearings 11, 13 enable the differences in the length and the oblique position of the transport rail 10 to be taken-up.

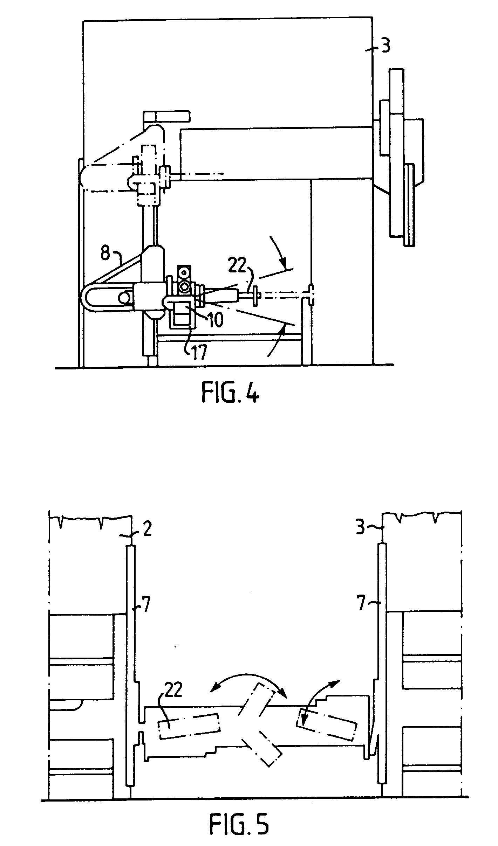

The bearings 11 and 13 also enable the rail 10 to be rotated about an axis which is parallel to the longitudinal axis of the rail 10. This rail setting is illustrated in Fig. 4 and is accomplished with the aid of drive motor 16 having a pulse emitter, which enables the rail to be adjusted to a desired setting.

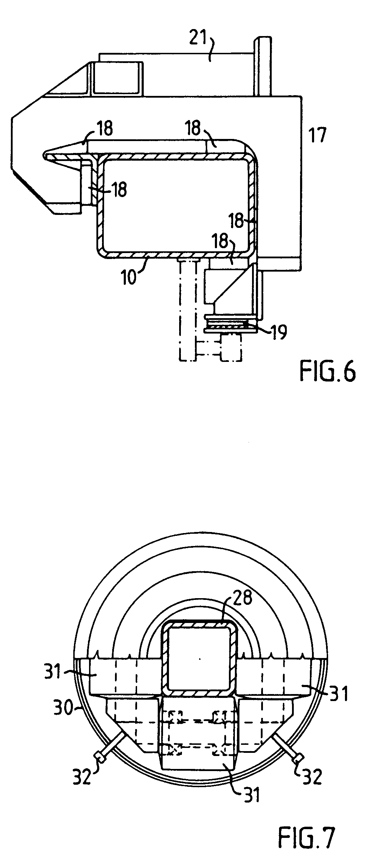

Arranged on the rail 10 for movement therealong is a trolley 17, which is best seen from Fig. 6. The trolley 17 rests on the rail 10 through the intermediary of rollers or runners 18 which engage respective sides of the rail 10 such as to take-up forces acting on the trolley 17. The trolley 17 is moved along the rail 10 with the aid of a toothed belt 19 which is attached to the trolley and extends over guide rollers 20 located at respective ends of the rail. The belt is driven by a drive motor (not shown) which is provided with a pulse counter so as to enable the position of the trolley 17 along the rail 10 to be controlled.

The trolley 17 is provided with an attachment means 21 which carries a pivotal gripping device 22. This device 22 functions to hold the elements 4 as they are handled in the apparatus 1. Accordingly, the gripping device 22 is adapted to the shape and size of the element 4 to be handled by the apparatus, and the device is also preferably adjustable with regard to size, so that it can be adapted to elements 4 of mutually different sizes.

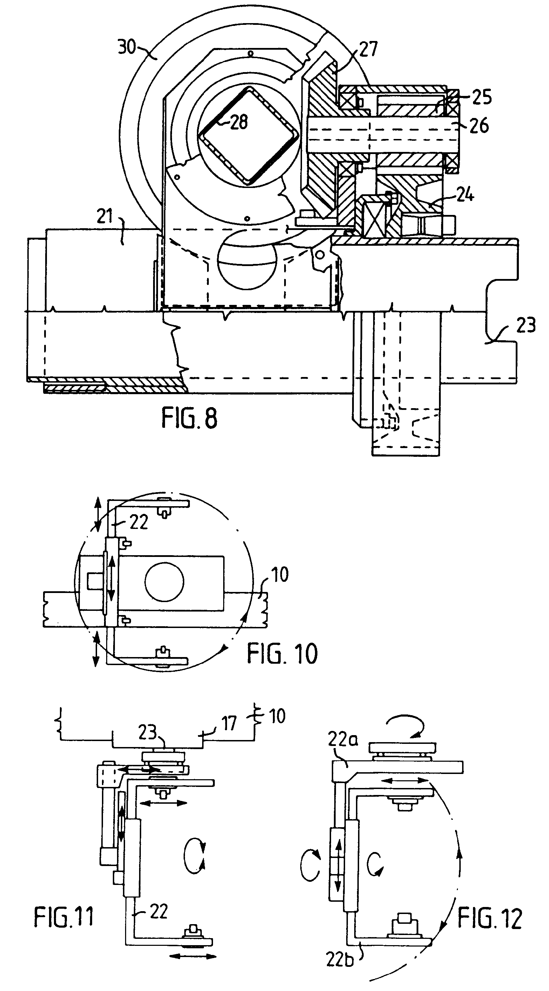

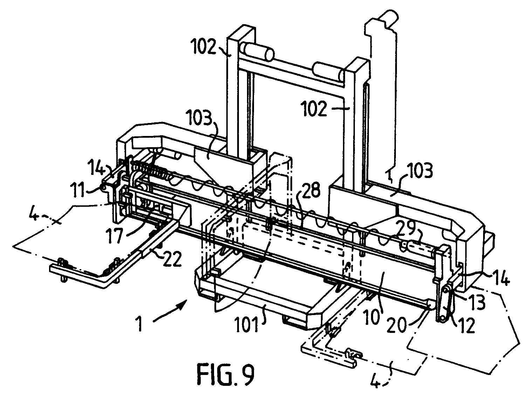

The connection between the trolley 17 and the gripping device 22, and the possibilities of rotating the gripping device 22 in the attachment means 21 are shown more clearly in Figs. 7 and 8. As will be seen from Fig. 8 in particular, a hollow shaft 23 is rotatably journalled in the attachment 21 on the trolley 17. The gripping device 22 is attached to the right-hand end of the hollow shaft 23 in Fig. 8. The hollow shaft 23 carries a gear wheel 24 which engages a gear wheel 25 rigidly mounted on an axle 26, this axle 26 being journalled on the trolley 17 and carrying a bevel gear wheel 27. Rotation of the bevel wheel 27 will result in rotation of the hollow shaft 23, via the gear wheels 25, 24, and therewith also in the rotation of the gripping device.

The bevel gear wheel 27 is rotated by a guide shaft 28 which is located above the transport rail 10 and journalled at the ends thereof, and which is driven by a drive motor 29 (see Fig. 1). The drive motor 29 is, in turn, provided with a pulse counter which enables the guide shaft 28 to be controlled, and therewith also the position of the gripping device 22. The guide shaft 28 has a non-round cross-section, in the case of the illustrated embodiment a square cross-section, and passes through a follower in the form of a housing 30 which accommodates rollers 31 intended to run against a respective side of the guide shaft 28. The axles of the rollers 31 can be adjusted with the aid of setting screws 32, in a manner such that the rollers 31 will run on the shaft 28 substantially in the absence of any play therebetween. When the guide shaft 28 is rotated, the rollers 31 will also rotate and thereby turn a bevel gear wheel which engages or meshes with the bevel gear wheel 27. Consequently, rotation of the guide shaft 28 will result in rotation of the gripping device 22.

The guide shaft 28 and the mechanism for transmitting movement to the gripping device 22 are used to enable the elements 4 to be turned during their transfer from the press 2 to the press 3. This is illustrated in chain lines in Fig. 1. As illustrated in the Figure, the element 4 is turned first to the position 4c, in which the element is essentially vertical, and then to position 4d, in which the element has been turned through an angle of 180° from its original position 4b. The element is then ready to be introduced into the press by the feeder 6, as indicated at position 4e.

Fig. 9 illustrates another embodiment of the inventive handling apparatus. This alternative embodiment has many components which are similar to the embodiment previously described and which have been identified in Fig. 9 with the aid of the same reference numerals as those used earlier. Consequently, only those parts of the apparatus which differ from the Fig. 1 embodiment will be described in the following.

In the case of the embodiment illustrated in Fig. 9, the apparatus 1 is mounted in a floor stand 101 having two vertical guides 102. Height adjustment slides 103 are arranged for movement along the guide 102 and can be moved vertically with the aid of jacks provided in the hollow guides 102. The slides 103 have the form of arms which projects from the guides 102 and which carry at their respective ends lateral adjustment slides 14.

Although the apparatus illustrated in Fig. 9 will afford most of the advantages afforded by the previously described embodiment, the floor stand 101 encroaches somewhat on the floor space on one side of the press line.

Figs. 10, 11 and 12 illustrate schematically the various patterns of movement carried out by the gripping device 22. In the case of the embodiment illustrated in Figs. 10, 11 and 12, the gripping device 22 is substantially U-shaped and is attached to the hollow shaft 23 through one leg of the U. The hollow shaft 23 is provided with holes through which there extend the control lines of gripping members intended for gripping the element 4 in the gripping device 22. These gripping members are of a kind known per se and may comprise, for instance, two mutually parallel and mutually facing clamp devices arranged in adjacent, slightly overlapping relationship, e.g. pneumatic clamp devices sold under the trade name Tünkers KG, type PKS. In distinction to the gripping device 22 of the embodiments illustrated in Figs. 1 and 9, the gripping device illustrated in Figs. 10, 11 and 12 has an L-shaped part 22a, one leg of which is attached to the hollow shaft 23, and a pivotal U-shaped part 22b which is pivotally attached to the other leg of the L-shaped part 22. In addition to enabling the element 4 to be turned in the manner described with reference to Fig. 1, this latter embodiment of the gripping device will also enable the element 4 to be turned in a plane which extends at right angles to the plane in which the first mentioned turn was effected.

## Claims

1. Apparatus for transporting and handling piece goods (4), comprising a stand or like structure; a transport rail (10) or path carried by said stand; a trolley (17) which can be moved along the rail (10) by means of a separate drive means (19); a gripping device (22) which is pivotally mounted on the trolley and intended for holding said piece goods (4); a rotatably journalled guide shaft (28) of non-round cross-section which extends substantially parallel with the transport rail (10); a follower (30, 31) which is rotatably arranged on the trolley (17) and connected to the guide shaft (28) so as to be slideable therealong but torsionally rigid in a radial direction, characterized in that an angular rotation transmission means (23-27) is arranged between the follower (30, 31) and the gripping device (22) to transmit rotational movement of the follower (30, 31), caused by rotation of the guide shaft (28), to the gripping device (22); in that the guide shaft (28) has a substantially rectangular cross-section with planar surfaces; in that the follower incorporates a holder means (30) and four rollers (31) journalled in the holder means, each of said rollers being intended to abut a respective planar surface of said guide shaft (28); and in that the holder means is connected to the angular rotation transmission means (23-27).

2. Apparatus according to Claim 1, characterized in that the stand includes at least two substantially vertical guides (7; 102) located at respective ends of the transport rail (10); and in that each guide carries a slide (8; 103 ) which can be driven separately along its associated guide and which is pivotally coupled to a respective end of the transport rail (10).

3. Apparatus according to Claim 2, characterized in that the ends of the transport rail (10) are each pivotally connected to a respective lateral adjustment slide (14) which are individually movable substantially in the horizontal direction and which, in turn, are each arranged on a respective one of the vertically movable height adjustment slides (8; 103).

4. Apparatus according to any of the preceding claims, characterized in that the gripping device (22) is mounted on a hollow shaft (23) which is rotatably journalled on the trolley ( 17) and which is provided with openings for the through-passage of control lines to gripping members mounted on the gripping device (22; and in that the hollow shaft (23) is connected to the angular rotation transmission means.

5. Apparatus according to Claim 4, characterized in that the gripping device (22) is substantially U-shaped; in that the gripping device (22) is rigidly connected to the hollow shaft (23) through one leg of the U; and in that the attachment point on said leg can be moved therealong.

6. Apparatus according to Claim 4, characterized in that the gripping members comprise two mutually parallel and mutually facing clamping devices arranged adjacent one another in slightly overlapping relationship, for instance pneumatic clamping devices.

7. Apparatus according to Claim 4, characterized in that the gripping device (22) includes an L-shaped part (28a), the one end of which is attached to the hollow shaft (23), and a U-shaped part (22b) which is pivotally connected to the other leg of the L-shaped part.

## Revendications

1. Appareil de transport et de manutention de pièces (4), comprenant un socle ou une structure analogue, un rail ou trajet de transport (10) supporté par le socle, un chariot (17) qui peut être déplacé le long du rail (10) par un dispositif séparé d'entraînement (19), un dispositif de serrage (22) monté sur le chariot sous forme articulée et destiné à supporter les pièces (4), un arbre de guidage (28) de section non circulaire, qui peut tourillonner et qui est pratiquement parallèle au rail de transport (10), un organe suiveur (30, 31) qui est disposé afin qu'il puisse tourner sur le chariot (17) et qui est raccordé à l'arbre de guidage (28) afin qu'il puisse coulisser le long de celui-ci, mais rigide à la torsion en direction radiale, caractérisé en ce qu'une transmission (23-27) transmettant une rotation d'angle est disposée entre l'organe suiveur (30, 31) et le dispositif de serrage (22) afin qu'elle transmette un mouvement de rotation de l'organe suiveur (30, 31), provoqué par la rotation de l'arbre de guidage (28), au dispositif de serrage (22), en ce que l'arbre de guidage (28) a une section pratiquement rectangulaire à surfaces planes, en ce que l'organe suiveur comporte un dispositif de support (30) et quatre galets (31) tourillonnant dans le dispositif de support, chacun des galets étant destiné à être en butée contre une surface plane respective de l'arbre de guidage (28), et en ce que le dispositif de support est raccordé à la transmission d'angle (23-27).

2. Appareil selon la revendication 1, caractérisé en ce que le socle comprend au moins deux guides sensiblement verticaux (7 ; 102) placés aux extrémités respectives du rail du transport (10), et en ce que chaque guide porte un coulisseau (8 ; 103) qui peut être entraîné séparément le long du guide associé et qui est couplé à une extrémité respective du rail de transfert (10) afin qu'il puisse pivoter.

3. Appareil selon la revendication 2, caractérisé en ce que les extrémités du rail de transport (10) sont chacune raccordée par pivotement sur un coulisseau respectif (14) d'ajustement latéral qui est mobile individuellement pratiquement en direction horizontale et qui est disposé lui-même à une extrémité de l'un des coulisseaux (8 ; 103) correspondant d'ajustement en hauteur qui sont mobiles verticalement.

4. Appareil selon l'une quelconque des revendications précédentes, caractérisé en ce que le dispositif de serrage (22) est monté sur un arbre creux (23) qui peut tourillonner sur le chariot (17) et qui a des ouvertures pour le passage traversant de lignes de commande d'organes de serrage montés sur le dispositif de serrage (22), et en ce que l'arbre creux (23) est raccordé à la transmission de rotation d'angle.

5. Appareil selon la revendication 4, caractérisé en ce que le dispositif de serrage (22) a pratiquement une forme en U, en ce que le dispositif de serrage (22) est raccordé rigidement à l'arbre creux (23) par une première branche du U, et en ce que le point de fixation sur la branche peut être déplacé le long de celle-ci.

6. Appareil selon la revendication 4, caractérisé en ce que les organes de serrage comportent deux dispositifs de serrage parallèles l'un à l'autre et tournés l'un vers l'autre, placés l'un près de l'autre de manière qu'ils se recouvrent légèrement, notamment sous forme de dispositifs pneumatiques de serrage.

7. Appareil selon la revendication 4, caractérisé en ce que le dispositif de serrage (22) comprend une partie en forme de L (28a) dont une première extrémité est fixée à l'arbre creux (23), et une partie en U (22b) qui est raccordée de manière articulée sur l'autre branche de la partie en L.

**Patentansprüche**

1. Vorrichtung zum Transportieren und Handhaben von Stückgut (4), umfassend ein Gestell oder ähnliche Struktur; eine Transportschiene (10) oder Pfad getragen von dem Stand; eine Laufkatze (17), die entlang der Schiene (10) mittels einer separaten Antriebseinrichtung (19) bewegt werden kann; eine Greifereinrichtung (22), die schwenkbar auf der Laufkatze zum Halten des Stückguts (4) montiert ist; eine drehbare an beiden Enden gelagerte Führungswelle (28) mit nicht-rundem Querschnitt, die im wesentlichen parallel zu der Transportschiene (10) verläuft; eine Gewindeleitbacke (30, 31), die drehbar auf der Laufkatze (17) angeordnet und mit der Führungswelle (28) verbunden ist, um daran entlanggleitend, jedoch torsionssteif in einer Radialrichtung zu sein, dadurch gekennzeichnet, daß eine Winkeldrehgetriebe-Einrichtung (23-27) zwischen der Gewindeleitbacke (30, 31) und der Greifereinrichtung (22) angeordnet ist, um Drehbewegungen der Gewindeleitbacke (30, 31) verursacht durch Drehung der Führungswelle (28) auf die Greifereinrichtung (22) zu übertragen; daß die Führungswelle (28) einen im wesentlichen rechteckigen Querschnitt mit ebenen Flächen besitzt; daß die Gewindeleitbacke eine Halteeinrichtung (30) und vier in der Halteeinrichtung an beiden Enden gelagerte Rollen (31) umfaßt, wobei beabsichtigt ist, daß jede der Rollen an eine entsprechende ebene Fläche der Führungswelle (28) anliegt; und daß die Halteeinrichtung mit der Winkeldrehgetriebe-Einrichtung (23-27) verbunden ist.

2. Vorrichtung nach Anspruch 1, dadurch gekennzeichnet, daß der Stand mindestens zwei im wesentlichen vertikale Führungen (7; 102), umfaßt die an entsprechenden Enden der Transportschiene (10) angeordnet sind; und daß jede Führung ein Gleitstück (8;103) trägt, das entlang seiner zugeordneten Führung separat angetrieben werden kann, und das schwenkbar an ein entsprechendes Ende der Transportschiene (10) gekoppelt ist.

3. Vorrichtung nach Anspruch 2, dadurch gekennzeichnet, daß die Enden der Transportschiene (10) jeweils schwenkbar mit einer entsprechenden seitlichen Stellschiene (14) verbunden sind, die individuell im wesentlichen in Horizontalrichtung bewegbar sind, und die wiederum jeweils an einem entsprechenden Ende der vertikal bewegbaren Höhenstellschiene (8; 103) angeordnet sind.

4. Vorrichtung nach einem der vorangehenden Ansprüche, dadurch gekennzeichnet, daß die Greifereinrichtung (22) auf einer Hohlwelle (23) montiert ist, die drehbar auf der Laufkatze (17) an beiden Enden lagert ist, und die mit Öffnungen zum Durchführen von Steuerleitungen zu auf der Greifereinrichtung (22) montierten Greiferelementen vorgesehen ist; und daß die Hohlwelle (23) mit der Winkeldrehgetriebe-Einrichtung verbunden ist.

5. Vorrichtung nach Anspruch 4, dadurch gekennzeichnet, daß die Greifereinrichtung (22) im wesentlichen U-förmig ist; daß die Greifereinrichtung (22) über eine Flanke des Us starr mit der Hohlwelle (23) verbunden ist; und daß der Befestigungspunkt auf der Flanke entlang bewegt werden kann.

6. Vorrichtung nach Anspruch 4, dadurch gekennzeichnet, daß die Greiferelemente zwei zueinander parallele und einander zugewandte Spanneinrichtungen umfassen, die aneinander angrenzend in leicht überlappender Zuordnung angeordnet sind, z.B. pneumatische Spanneinrichtungen.

7. Vorrichtung nach Anspruch 4, dadurch gekennzeichnet, daß die Greifereinrichtung (22) ein L-förmiges Teil (28a) umfaßt, von welchem das eine Ende an der Hohlwelle (23) befestigt ist und ein U-förmiges Teil (22b), das schwenkbar mit der anderen Flanke des L-förmigen Teiles verbunden ist.

FIG.1

FIG. 2

FIG. 3

7

FIG. 4

FIG. 5

FIG.6

FIG.7

FIG.8

FIG. 10

FIG.11

FIG. 12

FIG. 9